# EUROPEAN PATENT APPLICATION

(11) **EP 2 068 124 A1**
(43) Date of publication of application: **10.06.2009**
(21) Application number: 07122256.6
(22) Date of filing: 04.12.2007
(51) Int. Cl.: G01D 5/347, B25J 9/04

(54) **Articulated arm measuring machine endowed with multiple measurement disks**

(71) Applicant: Metris IPR N.V., 3001 Leuven (BE)
(72) Inventor: Tomelleri, Raffaele, 37066, Sommacampagna (VR) (IT)
(74) Representative: Brants, Johan P.E.

(57) **Abstract**

The present invention relates to a machine with at least one axis of rotation for which the at least one axis is endowed with at least two encoder disks, each one having at least one reading head. The invention also relates to a machine with at least one axis of rotation for which the at least one axis is endowed with at least once encoder disk, having two circular paths, each path having at least one reading head.

## Description

The present invention concerns an articulated arm measuring machine (e.g. coordinate measurement machine arms) endowed with rotative transducers having more reading disks. Articulated arm measuring machine typically comprise a number of articulated elongate segments or links. Adjoining segments are mechanically connected by at least one joint which allows rotation of one segment with respect to the adjoining segment around an axis. The arm is attached to a base at one end, also by at least one joint that permits rotation around an axis. The arm is attached at the other end to a sensor *via* at least one joint that also permits rotation around an axis. Such arms are well known in the art.

The articulated arm measuring machines are equipped with transducers to measure the angle of each of their axes, so the cartesian co-ordinates of a touch sensor attached to the arm are derived from their readings according to known techniques.

The transducer for the angle of each axis can either be housing type, having their own internal bearings that support the encoder disk, or open type, with the encoder disk directly mounted on the axis that bears the arm whose rotation is measured.

This last solution is widely employed for space reasons, but the drawback is that the disk can be subject to non negligible rotation errors and translations that may alter the reading, especially when just one single reading head is used for each disk.

In fact, in case the path of the disk is read by one single reading head, any possible disk translation is considered as disk rotation, with following non negligible errors.

In order to avoid this problem at least two reading heads must be used, that read the same disk, and the mean of the two readings must be calculated to correct translation errors. Such a solution is disclosed in US 7,069,664

There are portable articulated arm measuring machines endowed with open measurement systems that measure the rotation of one or more axes by means of disks having two reading heads that are symmetrically placed, and this allows to compensate for the main error component given by the disk eccentricity or by the disk translations, by calculating the mean of the two readings.

Measurement disks usually suffer from other sources of errors, besides those given by disk eccentricity and translations, that cannot be compensated for by means of just two reading heads. Among these errors are those arising from the path errors and that cannot be compensated for by the mean of two readings heads.

Further, when using two reading heads on the same disk, the zero is currently set reading the signals coming from both heads and this requires a large axis angular run of at least 180° to set the zero of both reading heads. WO 2006/040153 A2 discloses a device and method where zeroing is unnecessary.

More than two reading heads, as four for example, can solve the above errors and problem, but the cost of the reading heads is high.

### SUMMARY OF THE INVENTION

Main purpose of the present finding is to solve the problems described above and to allow compensation even for errors besides those given by eccentricity and translations.

Further purpose of the present finding is to allow the zeroing of the axis angle by means of any of the two reading heads, limiting the axis rotation during zero setting.

Such purposes, and more as will become apparent from the following description, are reached, according to the invention, with a solution characterised by that:
1. On the axis, whose angular rotation is to be read, at least two measurement disks are fixed and set close to each other and at least one reading head is set on each of them
2. The reading disks are oriented in such a way to allow the zero setting reading both zero signals coming from the two disks.

One embodiment of the invention is a machine with at least one axis of rotation for which the at least one axis is endowed with at least two encoder disks, each one having at least one reading head.

Another embodiment of the invention is a machine as defined above, which is an articulated arm measuring machine.

Another embodiment of the invention is a machine as defined above, for which the two encoder disks are placed with the paths in opposite directions, so the respective reading heads are also placed with opposite directions.

Another embodiment of the invention is a machine as defined above, for which the two reading heads are placed at an angle α between 150° and 180°.

Another embodiment of the invention is a machine as defined above, for which the zero signal of the two disks are such that the zero setting of the reading heads needs an angular run less than 90°.

Another embodiment of the invention is a machine as defined above, for which the zero setting of the two reading heads is carried out by means of the zero signal coming from only one of the two reading heads.

Another embodiment of the invention is a machine as defined above, for which the at least one axis is endowed with at least once encoder disk, having circular two paths, each path having least one reading head.

Another embodiment of the invention is a machine as defined above, which is an articulated arm measuring machine.

Another embodiment of the invention is a machine as defined above, for which the two circular paths disks are placed with the paths in opposite directions, so the respective reading heads are also placed with opposite directions.

Another embodiment of the invention is a machine as defined above, for which the two reading heads are placed at an angle α between 150° and 180°.

Another embodiment of the invention is a machine as defined above, for which the zero signal of the two paths are such that the zero setting of the reading heads needs an angular run less than 90°.

Another embodiment of the invention is a machine as defined above, for which the zero setting of the two reading heads is carried out by means of the zero signal coming from only one of the two reading heads.

Another embodiment of the invention is a method of measuring an object using an articulated arm measuring machine as defined above.

Another embodiment of the invention is a method of improving the accuracy of an articulated arm measuring machine by endowing at least one axis with at least two encoder disks, each one having at least one reading head.

Another embodiment of the invention is a method of improving the accuracy of an articulated arm measuring machine by endowing at least one axis with at least once encoder disk, having circular two paths, each path having least one reading head.

### DESCRIPTION OF THE FIGURES

The present invention is here below further described in some preferred embodiments that are to be considered in all respects as illustrative and not restrictive, with reference made to the attached tables and drawings, where:
- **FIG. 1**: schematically shows a measurement disk with one reading head
- **FIG. 2**: schematically shows a measurement disk with two reading heads
- **FIG. 3**: schematically shows a measurement disk with four reading heads
- **FIG. 4**: schematically shows the section of an axis of the machine endowed with two measurement disks each with one reading head
- **FIG. 5**: schematically shows the front view of an axis of the machine endowed with two measurement disks each with one reading head

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The articles "a" and "an" are used herein to refer to one or to more than one, i.e. to at least one of the grammatical object of the article. The recitation of numerical ranges by endpoints includes all integer numbers and, where appropriate, fractions subsumed within that range (e.g. 1 to 5 can include 1, 2, 3, 4 when referring to, for example, a number of heads, and can also include 1.5, 2, 2.75 and 3.80, when referring to, for example, measurements). The recitation of end points also includes the end point values themselves (e.g. from 1.0 to 5.0 includes both 1.0 and 5.0).

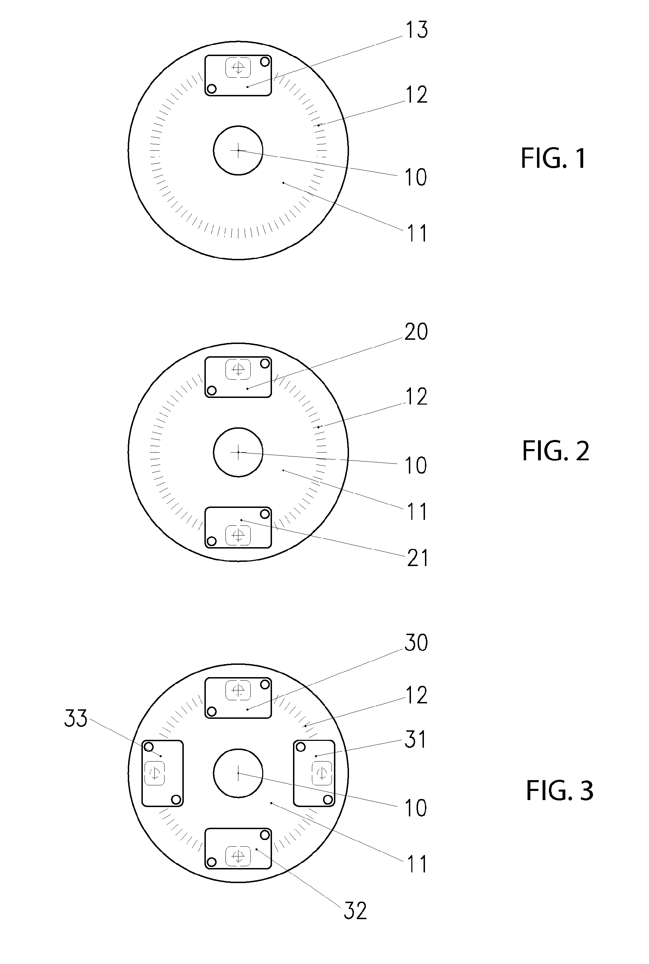

**FIG. 1** shows a front view of encoder disk **11** on which path **12** is carved, which is read by reading head **13.**
**FIG. 2** shows a front view of encoder disk **11** with path **12,** that is transduced by the two reading heads **20** and **21.**
**FIG. 3** shows a front view of encoder disk **11** with path **12,** that is read by the four reading heads **30, 31, 32** and **33.**

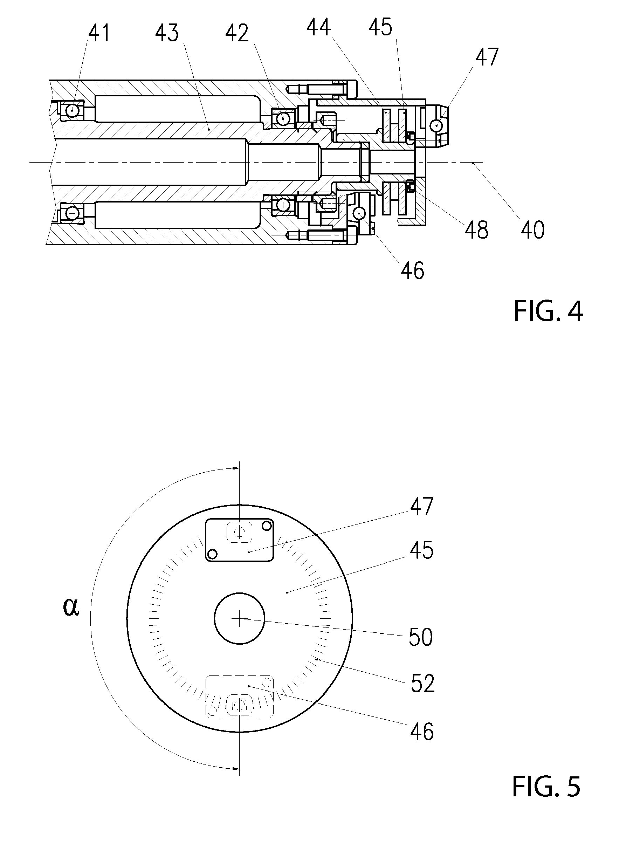

**FIG. 4** shows a section along axis **40** of a rotation axis of an articulated arm measuring machine.
   Two bearings, **41** and **42,** support and constrain the rotation of the shaft **43** around axis **40.** On the right-hand side of the shaft two encoder disks **44** and**45** are fixed and rotate in concert with the shaft **43,** which disks are endowed with reading heads **46** and **47,** the first of which reads the path in disk **44** from the top while the second reads the path of disk **45** from the opposite side. The path **12** is typically formed from a ring of gratings. The two encoder disks together are axially fixed by means of lockring **48** and do not rotate in concert with the shaft **43.**
**FIG. 5** shows a view along arrow **49** of **FIG. 4****,** where it is possible to see reading head **47** while reading head **46** is hidden, thus shown with dashed line.

Another embodiment of the invention is a machine with at least one axis of rotation, preferably an articulated arm measuring machine, for which at least one axis is endowed with at least one (*e.g.* 1, 2, 3) encoder disk, having circular two paths, each path having at least one (e.g. 1, 2, 3) reading head. The circular paths may be disposed either side of the encoder disk, or on the same side of the encoder disk in concentric circles.

The mean of the readings from the two heads gives the measure of the axis rotation that is not influenced by possible eccentricities or translations of the rotation axis. This solution has yet some advantages with respect to the solution with two reading heads applied to one circular path. The two disks or circular paths are affected by a very similar error trend, being they manufactured in the same plant, so asymmetrical path errors are allowed to be compensated for by having inverted the reading direction of the one disk or path with respect to the reading direction of the other one.

This is especially evident if the orientation between the two disks or paths is chosen in such a way that the zero signal falls at the same time under both reading heads.

This solution allows to set the zero of the two measurement systems at the same point without requiring long angular runs during zero setting.

Further the possibility of modifying the positioning angular phase of a disk with respect to the other one allows to further improve the measurement error coming from the mean of the two readings, and this can be carried out on a purposely suited calibration bench, where the theoretical measure is compared to the mean measure, and this with different phases between the two disks.

The two reading heads have a phase shift of angle α, that is usually close to or at 180°, but that may also move away slightly from this value, for example at 145°, 150°, 155°, 160°, 165°, 170°, 175°, 176°, 177°, 178°, or 179° or a value in the range between any two of the aforementioned values.

In order to make it possible to modify the relative phase shift of the two encoder disks or circular paths, without altering the angular run to set the zero of the two heads, it is also possible to set the zero of the two heads using the zero signal coming from just one of them.

The present invention has been illustrated and described in some preferred embodiments, but it is intended that variations in the execution are still possible, within the scope and the protection of the present patent for industrial invention.

For instance, the configuration of pairs of disks and read heads can be used for other devices than measuring arm such as any mechanical device having a rotation axis whose angle must be accurately measured. Such devices are robots, laser trackers, laser radars, CCM arms, RCA's.

## Claims

1. Machine with at least one axis of rotation for which the at least one axis is endowed with at least two encoder disks, each one having at least one reading head.

2. Machine according to claim 1, which is an articulated arm measuring machine.

3. Machine according to the previous claim, for which the two encoder disks are placed with the paths in opposite directions, so the respective reading heads are also placed with opposite directions.

4. Machine according to the previous claims, for which the two reading heads are placed at an angle α between 150° and 180°.

5. Machine according to any of the previous claims, for which the zero signal of the two disks are such that the zero setting of the reading heads needs an angular run less than 90°.

6. Machine according to any of the previous claims, for which the zero setting of the two reading heads is carried out by means of the zero signal coming from only one of the two reading heads.

7. Machine with at least one axis of rotation, for which the at least one axis is endowed with at least once encoder disk, having circular two paths, each path having least one reading head.

8. Machine according to claim 7, which is an articulated arm measuring machine.

9. Machine according to claim 7 or 8, for which the two circular paths disks are placed with the paths in opposite directions, so the respective reading heads are also placed with opposite directions.

10. Machine according to any of claims 7 to 9, for which the two reading heads are placed at an angle α between 150° and 180°.

11. Machine according to any of claims 7 to 10, for which the zero signal of the two paths are such that the zero setting of the reading heads needs an angular run less than 90°.

12. Articulated arm measuring machine according to any of the previous claims, for which the zero setting of the two reading heads is carried out by means of the zero signal coming from only one of the two reading heads.

13. A method of measuring an object using an articulated arm measuring machine as defined in any of claims 1 to 12.

14. A method of improving the accuracy of an articulated arm measuring machine by endowing at least one axis with at least two encoder disks, each one having at least one reading head.

15. A method of improving the accuracy of an articulated arm measuring machine by endowing at least one axis with at least once encoder disk, having circular two paths, each path having least one reading head.
